# EUROPÄISCHE PATENTSCHRIFT

(11) **EP 3 722 184 B1**
(45) Veröffentlichungstag und Bekanntmachung des Hinweises auf die Patenterteilung: **19.07.2023**
(21) Anmeldenummer: 20166996.7
(22) Anmeldetag: 31.03.2020
(51) Int. Cl.: B62D 6/00, B62D 6/02, B66F 9/075

(54) **FLURFÖRDERZEUG**
INDUSTRIAL TRUCK
CHARIOT DE MANUTENTION

(30) Priorität: 10.04.2019 DE 102019109466
(43) Veröffentlichungstag der Anmeldung: 14.10.2020
(73) Patentinhaber: Linde Material Handling GmbH, 63743 Aschaffenburg (DE)
(72) Erfinder: LINDENBORN, Otto, 63762 Großostheim (DE); HANKE, Mark, 63739 Aschaffenburg (DE)
(74) Vertreter: Patentship Patentanwaltgesellschaft

(56) Entgegenhaltungen:
- EP-A1- 0 596 167
- DE-A1- 10 204 742
- DE-A1-102015 005 124
- DE-C1- 19 702 313
- US-A1- 2018 201 316

## Beschreibung

Die Erfindung betrifft ein Flurförderzeug mit einer Steer-by-Wire-Lenkungsanlage, die einen Joystick als Betätigungselement und einen Lenkaktuator umfasst, wobei eine elektronische Steuerungseinrichtung vorgesehen ist, die eingangsseitig mit dem Joystick und ausgangsseitig mit dem Lenkaktuator in Wirkverbindung steht, wobei eine variable Lenkübersetzung vorgesehen ist, mittels der in Abhängigkeit von der Fahrgeschwindigkeit des Flurförderzeugs der Lenkwinkelbereich und die Lenkistgeschwindigkeit des Lenkaktuators veränderbar ist.

Bei Flurförderzeugen ist es bekannt, elektrische Steer-by-Wire-Lenkungsanlagen einzusetzen, zu deren Steuerung ein von der Bedienperson betätigtes Lenkrad oder ein von der Bedienperson betätigter Joystick vorgesehen ist.

Ein Lenkrad kann dazu führen, dass die Lenkbewegung von der Bedienperson einen Bewegungsaufwand mit viel Weg und viel Kraft benötigt. Ein Joystick ist gegenüber einem Lenkrad eine idealeres Bedienelement für die Betätigung der Lenkungsanlage durch die Bedienperson des Flurförderzeugs, da mit einem Joystick bei geringstem Bewegungsaufwand und Kraftaufwand ermüdungsfrei gelenkt werden kann.

Gegenüber einem Lenkrad, das mehrere Lenkradumdrehungen aufweisen kann, um den Lenkaktuator zwischen einem linken Anschlag und einem rechten Anschlag betätigen zu können, weist ein Joystick jedoch nur einen begrenzten Auslenkungsweg und somit einen begrenzten Verstellbereich auf. Daraus kann sich für kleine Lenkbewegungen eine schlechte Auflösung des Lenksignals und somit eine schlechte Feinfühligkeit der Lenkung ergeben.

Weiterhin kann es durch unterschiedlich schelle Lenkbewegungen am Joystick und das dynamische Lenkverhalten des Lenkaktuators, beispielsweise einer Lenkachse des Flurförderzeugs, zu Abweichungen zwischen dem an dem Joystick vorgegebenen Lenksollwert und dem sich an dem Lenkaktuator einstellenden Lenkistwert kommen. Da der Lenkaktuator, beispielsweise die Lenkachse von der Bedienperson des Flurförderzeugs in der Regel nicht einsehbar ist, können diese Abweichungen zwischen Lenksollwert und Lenkistwert zu deutlichen Einflüssen auf das Fahrverhalten und das Lenkverhalten des Flurförderzeugs führen.

Aus der DE 102 04 742 A1 ist ein gattungsgemäßes Flurförderzeug mit einer Joystick-Lenkungsanlage gemäß den Merkmalen des Oberbegriffs des Patentanspruchs 1 bekannt.

Die DE 197 02 313 C2 offenbart eine Einrichtung zur Steuerung des Lenkwinkels eines Kraftfahrzeug mit einem Steuerknüppel. Mit einem Kraftsensor wird die auf den Steuerknüppel ausgeübte Betätigungskraft erfasst und einem Lenkwinkelsollwertgeber zugeführt. Der Lenkwinkelsollwertgeber bestimmt in Abhängigkeit dem Signal des Kraftsensors und dem Fahrgeschwindigkeitssignal einer Fahrzeuglängsgeschwindigkeitssensorik einen Lenkwinkelsollwert, der einem Lenkregler zugeführt wird. Über Hydraulikzylinder wird der Steuerknüppel gemäß dem Lenkistwert ausgelenkt, um dem Fahrer über die Stellung des Steuerknüppels eine Rückmeldung des Lenkungszustandes auf den Steuerknüppel zu geben.

Die US 2018/0201316 A1 offenbart ein Flurförderzeug mit einer elektrischen Lenkung, die als Betätigungselement der Lenkung ein Lenkrad (tiller knob) aufweist. Die Lenkübersetzung ist in Abhängigkeit von der Fahrgeschwindigkeit angepasst, wobei zwei Lenkübersetzungen von 1,0 und 1,5 vorgesehen sind, die bei gleichbleibendem maximalen Lenksollwert des Bedienelements den Lenkwinkel des gelenkten Rades auf +/-60° bzw. +/-90⁰ begrenzen. Die Lenkübersetzungen von 1,0 wird für eine hohe Fahrgeschwindigkeit und die Lenkübersetzung von 1,5 für eine niedrige Fahrgeschwindigkeit des Flurförderzeugs verwendet.

Die DE 10 2015 005 124 A1 offenbart ein Steer-by-Wire-Lenksystem mit einem Joystick als Betätigungselement für Fahrzeuge, beispielsweise Rollstühle, bei dem eine geschwindigkeitsabhängige Lenkübersetzung vorgesehen ist.

Der vorliegenden Erfindung liegt die Aufgabe zugrunde, ein Flurförderzeug der eingangs genannten Gattung mit einer Joystick-Lenkungsanlage zur Verfügung zu stellen, das hinsichtlich der genannten Nachteile verbessert ist.

Diese Aufgabe wird erfindungsgemäß dadurch gelöst, dass die elektronische Steuerungseinrichtung die Lenkungsanlage in einem geschlossenen Regelkreis ansteuert, wobei durch Betätigung des Joysticks eine Führungsgröße des geschlossenen Regelkreises erzeugbar ist, wobei die elektronische Steuereinrichtung derart ausgebildet ist, dass bei einer Auslenkung des Joysticks in Abhängigkeit von der Fahrgeschwindigkeit die Änderungsgeschwindigkeit der Führungsgröße gegenüber der Betätigungsgeschwindigkeit des Joysticks verändert wird.

Mit einer variablen Lenkübersetzung kann der zur Verfügung stehende Verstellbereich des Joysticks optimal ausgenutzt werden. Mit der variablen Lenkübersetzung kann der Lenkwinkelbereich und die Lenkistgeschwindigkeit des Lenkaktuators in Abhängigkeit von der Fahrgeschwindigkeit des Flurförderzeugs auf einfache Weise derart angepasst werden, um der Bedienperson ein optimales Verhältnis zwischen guter Feinfühligkeit der Lenkung und großem Lenkbereich zu geben.

Ein gutes Lenkgefühl für die Bedienperson ist direkt verbunden mit einer geringen Abweichung zwischen dem am Joystick vorgegebenen Lenksollwert und dem sich am Lenkaktuator einstellenden Lenkistwert. Da sich der Joystick von der Bedienperson sehr einfach und schnell bewegen lässt, der Lenkaktuator jedoch eine gewisse Trägheit aufweist, wird die Lenkungsanlage erfindungsgemäß in einem geschlossenen Regelkreis angesteuert, so dass sich geringe Abweichungen zwischen Lenksollwert und Lenkistwert erzielen lassen und sich damit eine gutes Lenkgefühl für die Bedienperson erzielen lässt.

Die elektronische Steuereinrichtung ist gemäß der Erfindung derart ausgebildet, dass bei einer Auslenkung des Joysticks in Abhängigkeit von der Fahrgeschwindigkeit die Änderungsgeschwindigkeit der Führungsgröße gegenüber der Betätigungsgeschwindigkeit des Joysticks verändert wird. Sofern die Bedienperson den Joystick mit einer entsprechenden Betätigungsgeschwindigkeit auslenkt, entspricht normalerweise die Änderungsgeschwindigkeit der Führungsgröße der Betätigungsgeschwindigkeit des Joysticks. Gemäß der Änderungsgeschwindigkeit der Führungsgröße, die eine Lenksollgeschwindigkeit bildet, stellt sich eine Lenkistgeschwindigkeit des Lenkaktuators ein. Sofern in Abhängigkeit von der Fahrgeschwindigkeit die Änderungsgeschwindigkeit der Führungsgröße gegenüber der Betätigungsgeschwindigkeit des Joysticks verändert wird, kann auf einfache Weise eine variable Lenkübersetzung erzielt werden, mittels der in Abhängigkeit von der Fahrgeschwindigkeit des Flurförderzeugs die Lenkistgeschwindigkeit des Lenkaktuators veränderbar ist.

Gemäß einer vorteilhaften Ausführungsform der Erfindung ist der Joystick ausgehend von einer Neutralstellung in eine Betätigungsrichtung betätigbar. Der Joystick kann als einachsiger Joystick ausgebildet sein, der nur in eine Betätigungsrichtung betätigbar ist, oder als zweiachsiger Joystick ausgebildet sein, bei dem eine Betätigungsrichtung, beispielsweise die Querachse, zum Lenken verwendet wird. Ein derartiger Joystick kann ausgehend von der Neutralstellung in die Betätigungsrichtung nach links und rechts verschwenkt werden, um eine Lenkbewegung des Flurförderzeugs nach links und rechts zu erzielen. Mit einem derartigen Joystick kann die Lenkung in ergonomisch günstiger Weise von der Bedienperson des Flurförderzeugs betätigt werden.

Die elektronische Steuereinrichtung ist gemäß einer Ausgestaltungsform der Erfindung derart ausgebildet, dass bei einer Auslenkung des Joysticks in Abhängigkeit von der Fahrgeschwindigkeit der Betrag der Führungsgröße verändert wird. Der Betrag der Führungsgröße entspricht einem Lenkwinkelsollwert. Hiermit kann auf einfache Weise eine variable Lenkübersetzung erzielt werden, mittels der in Abhängigkeit von der Fahrgeschwindigkeit des Flurförderzeugs der Lenkwinkelbereich des Lenkaktuators veränderbar ist.

Vorteilhafterweise ist hierbei die elektronische Steuereinrichtung derart ausgebildet, dass bei einer Auslenkung des Joysticks mit zunehmender Fahrgeschwindigkeit der Betrag der Führungsgröße verringert wird. Für eine bestimmte Auslenkung des Joysticks stellt sich somit bei niedriger Fahrgeschwindigkeit ein höherer Betrag der Führungsgröße ein wie bei einer hohen Fahrgeschwindigkeit. Mit zunehmender Fahrgeschwindigkeit wird somit der Lenkwinkelbereich des Lenkaktuators reduziert, der mit dem Verstellbereich des Joysticks ansteuerbar ist. Es ergibt sich dadurch mit zunehmender Fahrgeschwindigkeit eine zunehmende Lenkwinkelbegrenzung. Eine derartige variable Lenkübersetzung ermöglicht eine feinfühlige Lenkung bei hoher Fahrgeschwindigkeit sowie einen großen Lenkwinkelbereich bei niedriger Fahrgeschwindigkeit des Flurförderzeugs.

Der Zusammenhang zwischen Auslenkung des Joysticks und in Abhängigkeit von der Auslenkung des Joysticks erzeugter Führungsgröße ist bevorzugt gemäß mindestens einer Kennlinie vorgegeben, wobei zumindest zwei verschiedene Kennlinien für unterschiedliche Fahrgeschwindigkeiten des Flurförderzeugs vorgesehen sind oder eine Kennlinie in Abhängigkeit von der Fahrgeschwindigkeit verändert wird. Anhand verschiedener Kennlinien für unterschiedliche Fahrgeschwindigkeiten, die beispielsweise in der elektronischen Steuereinrichtung abgespeichert sind, kann auf einfache Weise eine variable Lenkübersetzung erzielt werden, bei der sich bei einer Auslenkung des Joysticks mit zunehmender Fahrgeschwindigkeit der Betrag der Führungsgröße verringert. Eine variable Lenkübersetzung, bei der sich bei einer Auslenkung des Joysticks mit zunehmender Fahrgeschwindigkeit der Betrag der Führungsgröße verringert, kann ebenfalls auf einfache Weise erzielt werden, wenn nur eine Kennlinie vorgesehen ist, die beispielsweise in der elektronischen Steuereinrichtung abgespeichert ist, die von der elektronischen Steuereinrichtung in Abhängigkeit von der Fahrgeschwindigkeit verändert und angepasst wird.

Vorteilhafterweise ist hierbei die elektronische Steuereinrichtung derart ausgebildet, dass bei einer Auslenkung des Joysticks mit zunehmender Fahrgeschwindigkeit die Änderungsgeschwindigkeit der Führungsgröße gegenüber der Betätigungsgeschwindigkeit des Joysticks verringert wird. Mit zunehmender Fahrgeschwindigkeit wird somit die Lenkistgeschwindigkeit des Lenkaktuators reduziert. Eine derartige variable Lenkübersetzung ermöglicht eine feinfühlige Lenkung bei hoher Fahrgeschwindigkeit sowie einen agile/direkte Lenkung bei niedriger Fahrgeschwindigkeit des Flurförderzeugs.

Eine variable Lenkübersetzung, mittels der in Abhängigkeit von der Fahrgeschwindigkeit des Flurförderzeugs die Lenkistgeschwindigkeit des Lenkaktuators veränderbar ist, kann alternativ oder zusätzlich dadurch erzielt werden, dass die elektronische Steuereinrichtung derart ausgebildet ist, dass in Abhängigkeit von der Fahrgeschwindigkeit die Änderungsgeschwindigkeit einer Stellgröße des geschlossenen Regelkreises verändert wird. Mit der Stellgröße wird in dem geschlossenen Regekreis der Lenkaktuator angesteuert. Sofern die Änderungsgeschwindigkeit der Stellgröße in Abhängigkeit von der Fahrgeschwindigkeit verändert wird, kann somit auch in Abhängigkeit von der Fahrgeschwindigkeit des Flurförderzeugs die Lenkistgeschwindigkeit des Lenkaktuators verändert werden.

Vorteilhafterweise ist hierzu die elektronische Steuereinrichtung derart ausgebildet, dass mit zunehmender Fahrgeschwindigkeit die Änderungsgeschwindigkeit der Stellgröße des geschlossenen Regelkreises verringert wird. Hierdurch wird ebenfalls erzielt, dass mit zunehmender Fahrgeschwindigkeit die Lenkistgeschwindigkeit des Lenkaktuators reduziert wird.

Gemäß einer Weiterbildung der Erfindung ist der Auslenkungsbereich um die Neutralstellung des Joysticks als Totband ausgebildet, wobei die elektronische Steuereinrichtung derart ausgebildet ist, dass das Totband in Abhängigkeit von der Fahrgeschwindigkeit des Flurförderzeugs verändert wird. Mit einem derartigen fahrgeschwindigkeitsbhbängigen Totband kann das Lenkverhalten verändert werden und der Feinsteuerbereich des Joysticks direkt beeinflusst werden.

Vorteilhafterweise ist hierzu die elektronische Steuereinrichtung derart ausgebildet, dass das Totband mit zunehmender Fahrgeschwindigkeit des Flurförderzeugs vergrößert wird. Bei niedriger Fahrgeschwindigkeit ergibt sich somit ein kleines Totband und bei hoher Fahrgeschwindigkeit ein großes Totband. Damit kann bei niedrigen Fahrgeschwindigkeiten an dem Joystick präzise und schnell gelenkt werden. Bei hohen Fahrgeschwindigkeiten wird mit einem großen Totband ein stabiles Fahrverhalten erzielt, bei dem verhindert wird, dass kleine Auslenkungsbewegungen des Joysticks aus der Neutralstellungen heraus zu Lenkbewegungen des Flurförderzeugs führen.

Gemäß einer Weiterbildung der Erfindung ist der Lenkwinkelbereich und/oder die Lenkgeschwindigkeit des Lenkaktuators in Abhängigkeit von einem oder mehreren der folgenden weiteren Parameter veränderbar und/oder ist an dem Joystick eine haptische Rückmeldung in Abhängigkeit von einem oder mehreren der folgenden weiteren Parameter erzeugbar:
- Lenkistwinkel
- Lenkleistung eines elektrischen Lenkaktuators
- Kippgrenze des Flurförderzeugs
- Aufgenommen Last
- Lastschwerpunkt einer aufgenommenen Last
- Assistenzsystem zur Umgebungsüberwachung und/oder Kollisionsvermeidung
- System für Zonenkontrolle (Zone Control)

Hierdurch wird es möglich, der Bedienperson durch Veränderung des Lenkwinkelbereichs und/oder der Lenkgeschwindigkeit des Lenkaktuators beispielsweise an dem Joystick eine Rückmeldung zu geben, wenn der Lenkaktuator eine hohe Lenkleistung benötigt, die zu hohem Verschleiß der gelenkten Räder führen, oder wenn sich der Lenkistwinkel in für die Kippsicherheit des Flurförderzeugs stabilitätskritischen Bereichen befindet. Alternativ oder zusätzlich ist es möglich, der Bedienperson über eine haptische Rückmeldung, beispielsweise eine Kraftrückmeldung, an dem Joystick eine Rückmeldung über die Lenkleistung und/oder die Kippsicherheit des Flurförderzeugs zu geben.

Gemäß einer vorteilhaften Ausführungsform der Erfindung weist das Flurförderzeug einen Fahrersitz mit einer Armlehne, insbesondere einer linken Armlehne, auf und ist der Joystick der Lenkungsanlage an der Armlehne, insbesondere an der linken Armlehne, des Fahrersitzes angeordnet. Mit einem an der Armlehne angeordneten Joystick kann eine ergonomische Betätigung der Lenkungsanlage erzielt werden, insbesondere wenn die Armlehne entsprechende Einstellmöglichkeiten aufweist. Sofern die Armlehne klappbar ist, kann weiterhin durch nach oben Klappen der Armlehne ein bequemer Ein- und Ausstieg der Bedienperson auf bzw. von dem Fahrersitz erzielt werden.

Das Flurförderzeug ist bevorzugt als Gegengewichtsgabelstapler ausgebildet.

Das erfindungsgemäße Flurförderzeug weist eine Reihe von Vorteilen auf.

Ein Flurförderzeug, beispielsweise ein Gegengewichtsgabelstapler, bei dem der Joystick zur Betätigung der Lenkungsanlage an einer Armlehne, bevorzugt der linken klappbaren Armlehne, des Fahrersitzes angeordnet ist, kann die Bedienperson das Flurförderzeug einfach betreten und auf dem Fahrersitz Platz nehmen und anschließend den Joystick in eine ergonomisch optimale Position bringen. Die Joystickbetätigung zum Lenken ist das ideale Bedienelement, da mit geringstem Weg und geringer Kraft ermüdungsfrei gelenkt werden kann. Der Joystick in Verbindung mit der variablen Lenkübersetzung ermöglicht eine feinfühlige Lenkung bei hohen Fahrgeschwindigkeiten und gleichzeitig große Lenkwinkel und hohe Lenkgeschwindigkeit bei niedrigen Fahrgeschwindigkeiten. In Verbindung mit dem geschlossenen Regelkreis wird eine positionsgeregelte Lenkung erzielt und ist die Stellung der gelenkten Räder bestmöglich auf die Stellung des Joysticks geregelt, wodurch ein gutes Lenkgefühl für die Bedienperson erzielt wird. Zudem ermöglicht es der geschlossene Regelreis, dass die Bedienperson aus der Stellung des Joysticks auf die Stellung der gelenkten Räder schließen kann.

Weitere Vorteile und Einzelheiten der Erfindung werden anhand der in den schematischen Figuren dargestellten Ausführungsbeispielen näher erläutert. Hierbei zeigt
- Figur 1: ein erfindungsgemäße Flurförderzeug in einer Seitenansicht,
- Figur 2: eine erste Kennlinie des Zusammenhangs zwischen Auslenkung des Joysticks und in Abhängigkeit von der Auslenkung des Joysticks erzeugter Führungsgröße,
- Figur 3: eine zweite Kennlinie des Zusammenhangs zwischen Auslenkung des Joysticks und in Abhängigkeit von der Auslenkung des Joysticks erzeugter Führungsgröße und
- Figur 4: eine Prinzipskizze des geschlossenen Regelkreises der Lenkungsanlage.

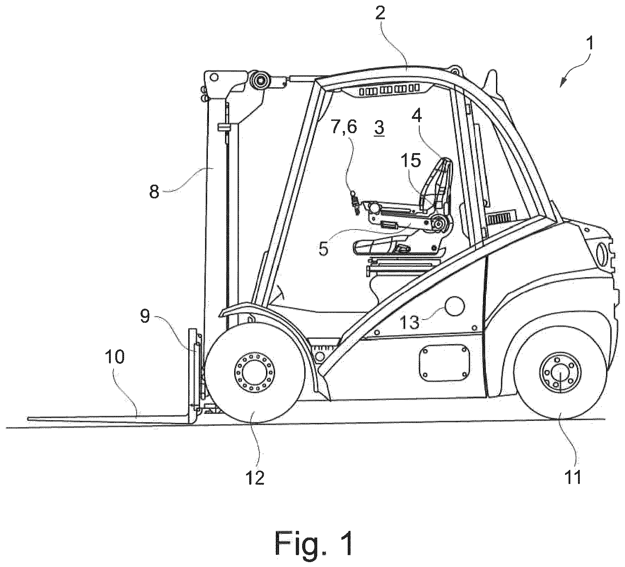

In der Figur 1 ist ein erfindungsgemäßes Flurförderzeug 1 dargestellt. Das Flurförderzeug 1 ist im dargestellten Ausführungsbeispiel als Gegengewichtsgabelstapler ausgebildet.

Innerhalb eines Fahrerschutzdaches bzw. einer Fahrerkabine 2 ist ein Arbeitsplatz 3 für eine Bedienperson ausgebildet. Der Arbeitsplatz 3 umfasst einen Fahrersitz 4 mit einer am Fahrersitz 4 angeordneten Armlehne 5. An der Armlehne 5 ist im vorderen Bereich mindestens ein Bedienelement 6 angeordnet. Die Armlehne 5 ist im hinteren Bereich um eine im Wesentlichen horizontale Schwenkachse 15 klappbar am Fahrersitz 4 angeordnet. Zudem kann die Armlehne 5 mit weiteren Einstellmöglichkeiten versehen sein, beispielsweise eine Höheneinstellbarkeit und/oder Längeneinstellbarkeit und/oder Neigungseinstellbarkeit, um das Bedienelement 6 für die jeweilige auf dem Fahrersitz 4 sitzende Bedienperson in eine optimale und ideale ergonomische Position einstellen zu können.

Im dargestellten Ausführungsbeispiel ist die Armlehne 5 als linke Armlehne des Fahrersitzes 4 ausgebildet.

Das an der Armlehne 5 angeordnete Bedienelement 6 ist im dargestellten Ausführungsbeispiel als Joystick 7 zur Betätigung einer elektrischen Steer-by-Wire Lenkungsanlage des Flurförderzeugs 1 ausgebildet.

Weiterhin kann an dem Fahrersitz 4 eine nicht näher dargestellte rechte Armlehne angeordnet sein, an der im vorderen Bereich mindestens ein nicht näher dargestelltes Bedienelement angeordnet ist, das beispielsweise als ein als Joystick ausgebildeter Bedienhebel ausgeführt ist. Mittels des an der rechten Armlehne des Fahrersitzes 4 angeordneten mindestens einen Bedienelements ist die Arbeitshydraulik des Flurförderzeugs 1 betätigbar, die in der Regel einen Hubantrieb zum Anheben und Absenken eines an einem Hubmast 8 angeordneten, als Hubschlitten ausgebildeten Lastaufnahmemittels 9, einen Neigeantrieb zum Neigen des Hubmastes 8 und einen oder mehrere Zusatzverbraucher umfasst, beispielsweise einen Seitenschieber, mittels dem an dem Lastaufnahmemittel 9 angeordnete Gabelzinken 10 in seitlicher Richtung verstellbar sind.

Die Lenkungsanlage umfasst weiterhin einen Lenkaktuator 11, der im dargestellten Ausführungsbeispiel als Lenkachse ausgebildet ist, die mit gelenkten Rädern versehen ist. Die Lenkachse 11 ist als Hinterachse des Flurförderzeugs 1 ausgebildet.

Eine Vorderachse des Flurförderzeugs 1 bildet eine Antriebsachse 12, die angetriebene Antriebsräder aufweist.

Die elektrische Steer-by-Wire Lenkungsanlage des Flurförderzeugs 1 weist eine elektronische Steuerungseinrichtung 13 auf, die eingangsseitig mit dem Joystick 7 und ausgangsseitig mit dem Lenkaktuator 11 zu dessen Ansteuerung in Wirkverbindung steht. Die elektronische Steuerungseinrichtung 13 steuert die Lenkungsanlage in einem geschlossenen Regelkreis an.

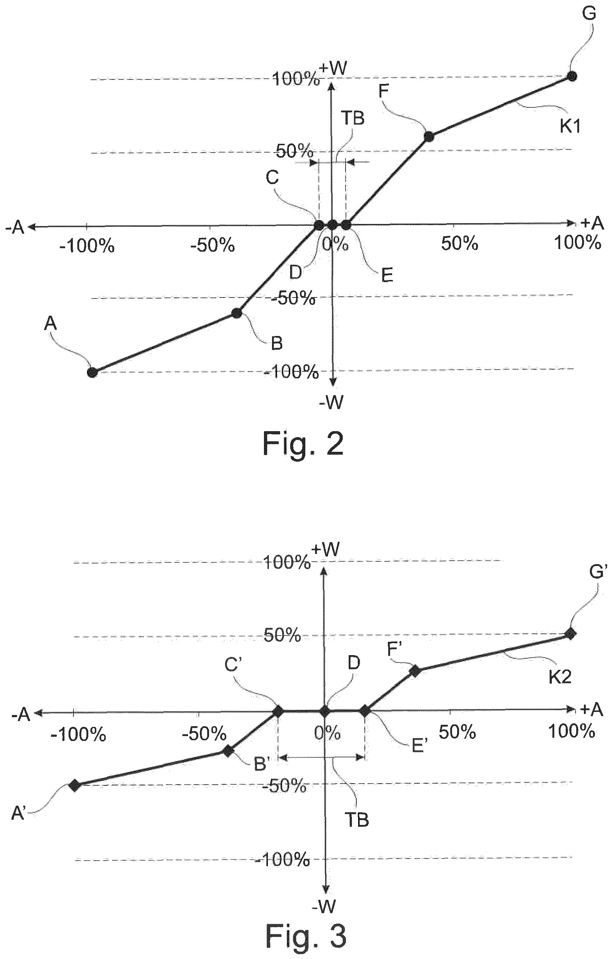

In den Figuren 2 und 3 sind Diagramme dargestellt, in denen Kennlinie K1, K2 des Zusammenhangs zwischen Auslenkung A des Joysticks 7 und in Abhängigkeit von der Auslenkung A des Joysticks 7 erzeugter Führungsgröße w dargestellt sind.

in den Figuren 2 und 3 ist hierbei auf der Abszisse die Auslenkung A des Joysticks 7 und auf der Ordinate die aus der entsprechenden Auslenkung A des Joysticks 7 erzeugte Führungsgröße w und somit der Lenkwinkelsollwert des geschlossenen Regelkreises der Lenkungsanlage dargestellt.

Der Joystick 7 ist ausgehend von einer Neutralstellung (Punkt D in den Figuren 2 und 3) in eine Betätigungsrichtung betätigbar. Bei Betätigung in Richtung +A wird beispielsweise das Flurförderzeug 1 nach rechts gelenkt und bei einer Betätigung in Richtung -A wird beispielsweise das Flurförderzeug 1 nach links gelenkt. Der Joystick 7 kann als einachsiger Joystick ausgebildet, der nur in die Betätigungsrichtung +/-A betätigbar ist, oder als zweiachsiger Joystick, bei dem die Betätigungsrichtung +/-A der Lenkung zugeordnet ist.

Bei der Kennlinie K1 der Figur 2 ist mit den Punkten C und E ein Totband TB um die Neutralstellung D dargestellt, in dem bei einer entsprechenden Auslenkung +/-A des Joysticks 7 keine Führungsgröße w erzeugt wird. Die Punkte B und F stellen Punkte dar, bei denen die Kennlinie K1 abknickt. An den Punkten B und F werden bei ca. +/-40% Auslenkung A des Joysticks 7 eine Führungsgröße w von ca. +/-60% erzeugt. Die Punkte A und G stellen die Endpunkte der Kennlinie K1 dar, wobei bei 100%-Auslenkung in +/-A des Joysticks 7 eine Führungsgröße w von +/-100% erzeugt wird. Die Kennlinie K1 wird von der elektronischen Steuereinrichtung 13 bei niedriger Fahrgeschwindigkeit des Flurförderzeugs 1 zur Ansteuerung der Lenkanlage verwendet.

Bei der Kennlinie K2 der Figur 3 ist mit den Punkten C' und E' ein Totband TB um die Neutralstellung D dargestellt, in dem bei einer entsprechenden Auslenkung +/-A des Joysticks 7 keine Führungsgröße w erzeugt wird. Das Totband TB der Figur 3 ist hierbei gegenüber dem Totband TB der Figur 2 vergrößert. Die Punkte B' und F' stellen Punkte dar, bei denen die Kennlinie K2 abknickt. Gegenüber der Figur 2 sind in der Figur 3 die Punkte B' und F' abgesenkt, d.h. in der Figur 3 werden an den Punkten B' und F` bei selber Auslenkung +/-A des Joysticks 7 wie in der Figur 2 jeweils eine niedrigere Führungsgröße w erzeugt wie in den Punkten B und F der Figur 2. An den Punkten B' und F' der Figur 3 werden bei ca. +/-40% Auslenkung A des Joysticks 7 eine Führungsgröße w von ca. +/-30% erzeugt. Die Punkte A' und G' stellen die Endpunkte der Kennlinie K2 dar. Gegenüber der Figur 2 sind in der Figur 3 die Punkte A' und G` abgesenkt, d.h. in der Figur 3 werden an den Punkten A' und G' bei selber Auslenkung +/-A des Joysticks 7 wie in der Figur 2 jeweils eine niedrigere Führungsgröße w erzeugt wie in den Punkten A und G der Figur 2, beispielsweise bei 100%- Auslenkung in +/-A des Joysticks 7 eine Führungsgröße w von +/-50% erzeugt. Die Kennlinie K2 wird von der elektronischen Steuereinrichtung 13 bei hoher Fahrgeschwindigkeit des Flurförderzeugs 1 zur Ansteuerung der Lenkanlage verwendet.

In der elektronischen Steuereinrichtung 13 können hierzu für unterschiedliche Fahrgeschwindigkeiten des Flurförderzeugs 1 jeweils unterschiedliche Kennlinien abgespeichert sein, die je nach Fahrgeschwindigkeit ausgewählt werden. Alternativ kann nur eine Kennlinie K1 abgespeichert sein und je nach Fahrgeschwindigkeit werden die Stützpunkte A, B, C, E, F, G der Kennlinie verändert.

Aus den Kennlinien K1, K2 der Figuren 2 und 3 ist ersichtlich, dass eine variable Lenkübersetzung vorgesehen ist, mittels der in Abhängigkeit von der Fahrgeschwindigkeit des Flurförderzeugs 1 der Lenkwinkelbereich des Lenkaktuators 11 verändert und somit angepasst wird, indem bei einer Auslenkung A des Joysticks 7 mit zunehmender Fahrgeschwindigkeit der Betrag der Führungsgröße w verringert wird. Zudem wird - wie aus den Kennlinien K1, K2 der Figuren 2 und 3 ersichtlich ist - mit zunehmender Fahrgeschwindigkeit des Flurförderzeugs das Totband TB vergrößert.

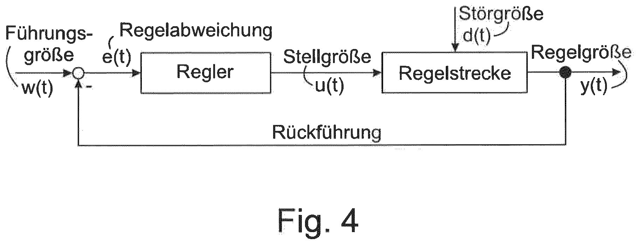

In der Figur 4 ist der geschlossene Regelkreis der Lenkanlage in einer Prinzipdarstellung dargestellt.

Aus der gemäß den Kennlinien K1, K2 erzeugte Führungsgröße w (Lenkwinkelsollwert) und der zurückgeführten Regelgröße y (Lenkwinkelistwert) wird durch Subtraktion eine Regelabweichung e erzeugt und einem Regler, beispielswiese einem P-Regler, zugeführt. Der Regler erzeugt eine Stellgröße u, mit der die Regelstrecke angesteuert wird, die den Lenkaktuator 11 (Lenkachse mit den gelenkten Rädern) umfasst. Auf die Regelstrecke kann eine Störgröße d einwirken.

Mit der variablen Lenkübersetzung kann weiterhin in Abhängigkeit von der Fahrgeschwindigkeit des Flurförderzeugs die Lenkistgeschwindigkeit verändert und angepasst werden. Hierzu kann bei einer Auslenkung des Joysticks 7 mit zunehmender Fahrgeschwindigkeit die Änderungsgeschwindigkeit der Führungsgröße w gegenüber der Betätigungsgeschwindigkeit des Joysticks 7 verringert werden. Bei niedriger Fahrgeschwindigkeit entspricht beispielsweise die Änderungsgeschwindigkeit der Führungsgröße w der Betätigungsgeschwindigkeit des Joysticks 7, d.h. die Führungsgröße w verändert sich genauso schnell wie der Joystick ausgelenkt wird. Bei hoher Fahrgeschwindigkeit wird jedoch die Änderungsgeschwindigkeit der Führungsgröße w gegenüber der Betätigungsgeschwindigkeit des Joysticks 7 verringert, d.h. die Führungsgröße w verändert sich langsamer als der Joystick 7 ausgelenkt wird.

Für die Veränderung und Anpassung der Lenkistgeschwindigkeit in Abhängigkeit von der Fahrgeschwindigkeit kann alternativ oder zusätzlich die Änderungsgeschwindigkeit der Stellgröße u des geschlossenen Regelkreises verändert werden. Beispielsweise kann der Regler bei niedriger Fahrgeschwindigkeit des Flurförderzeugs die Stellgröße u mit hoher Dynamik und somit hoher Änderungsgeschwindigkeit nachführen und bei hoher Fahrgeschwindigkeit des Flurförderzeugs die Stellgröße u mit niedriger Dynamik und somit niedriger Änderungsgeschwindigkeit nachführen.

## Patentansprüche

1. Flurförderzeug (1) mit einer Steer-by-Wire-Lenkungsanlage, die einen Joystick (7) als Betätigungselement und einen Lenkaktuator (11) umfasst, wobei eine elektronische Steuerungseinrichtung (13) vorgesehen ist, die eingangsseitig mit dem Joystick (7) und ausgangsseitig mit dem Lenkaktuator (11) in Wirkverbindung steht, wobei eine variable Lenkübersetzung vorgesehen ist, mittels der in Abhängigkeit von der Fahrgeschwindigkeit des Flurförderzeugs (1) der Lenkwinkelbereich und die Lenkistgeschwindigkeit des Lenkaktuators (11) veränderbar ist, **dadurch gekennzeichnet, dass** die elektronische Steuerungseinrichtung (13) die Lenkungsanlage in einem geschlossenen Regelkreis ansteuert, wobei durch Betätigung des Joysticks (7) eine Führungsgröße (w) des geschlossenen Regelkreises erzeugbar ist, wobei die elektronische Steuereinrichtung (13) derart ausgebildet ist, dass bei einer Auslenkung (A) des Joysticks (7) in Abhängigkeit von der Fahrgeschwindigkeit die Änderungsgeschwindigkeit der Führungsgröße (w) gegenüber der Betätigungsgeschwindigkeit des Joysticks (7) verändert wird.

2. Flurförderzeug nach Anspruch 1, **dadurch gekennzeichnet, dass** der Joystick (7) ausgehend von einer Neutralstellung (D) in eine Betätigungsrichtung (+/-A) betätigbar ist.

3. Flurförderzeug nach Anspruch 1 oder 2, **dadurch gekennzeichnet, dass** die elektronische Steuereinrichtung (13) derart ausgebildet ist, dass bei einer Auslenkung (A) des Joysticks (7) in Abhängigkeit von der Fahrgeschwindigkeit der Betrag der Führungsgröße (w) verändert wird.

4. Flurförderzeug nach Anspruch 3, **dadurch gekennzeichnet, dass** die elektronische Steuereinrichtung (13) derart ausgebildet ist, dass bei einer Auslenkung (A) des Joysticks (7) mit zunehmender Fahrgeschwindigkeit der Betrag der Führungsgröße (w) verringert wird.

5. Flurförderzeug nach einem der Ansprüche 1 bis 4, **dadurch gekennzeichnet, dass** der Zusammenhang zwischen Auslenkung (A) des Joysticks (7) und in Abhängigkeit von der Auslenkung (A) des Joysticks (7) erzeugter Führungsgröße (w) gemäß mindestens einer Kennlinie (K1; K2) vorgegeben ist, wobei zumindest zwei verschiedene Kennlinien (K1, K2) für unterschiedliche Fahrgeschwindigkeiten des Flurförderzeugs (1) vorgesehen sind oder eine Kennlinie in Abhängigkeit von der Fahrgeschwindigkeit verändert wird.

6. Flurförderzeug nach einem der Ansprüche 1 bis 5, **dadurch gekennzeichnet, dass** die elektronische Steuereinrichtung (13) derart ausgebildet ist, dass bei einer Auslenkung des Joysticks (7) mit zunehmender Fahrgeschwindigkeit die Änderungsgeschwindigkeit der Führungsgröße (w) gegenüber der Betätigungsgeschwindigkeit des Joysticks (7) verringert wird.

7. Flurförderzeug nach einem der Ansprüche 1 bis 6, **dadurch gekennzeichnet, dass** die elektronische Steuereinrichtung (13) derart ausgebildet ist, dass in Abhängigkeit von der Fahrgeschwindigkeit die Änderungsgeschwindigkeit einer Stellgröße (u) des geschlossenen Regelkreises verändert wird.

8. Flurförderzeug nach Anspruch 7, **dadurch gekennzeichnet, dass** die elektronische Steuereinrichtung (13) derart ausgebildet ist, dass mit zunehmender Fahrgeschwindigkeit die Änderungsgeschwindigkeit der Stellgröße (u) des geschlossenen Regelkreises verringert wird.

9. Flurförderzeug nach einem der Ansprüche 1 bis 8, **dadurch gekennzeichnet, dass** der Auslenkungsbereich um die Neutralstellung (D) des Joysticks (7) als Totband (TB) ausgebildet ist, wobei die elektronische Steuereinrichtung (13) derart ausgebildet ist, dass das Totband (TB) in Abhängigkeit von der Fahrgeschwindigkeit des Flurförderzeugs (1) verändert wird.

10. Flurförderzeug nach Anspruch 9, **dadurch gekennzeichnet, dass** die elektronische Steuereinrichtung (13) derart ausgebildet ist, dass das Totband (TB) mit zunehmender Fahrgeschwindigkeit des Flurförderzeugs (1) vergrößert wird.

11. Flurförderzeug nach einem der Ansprüche 1 bis 10, **dadurch gekennzeichnet, dass** der Lenkwinkelbereich und/oder die Lenkgeschwindigkeit des Lenkaktuators (11) in Abhängigkeit von einem oder mehreren der folgenden weiteren Parameter veränderbar ist und/oder an dem Joystick eine haptische Rückmeldung in Abhängigkeit von einem oder mehreren der folgenden weiteren Parameter erzeugbar ist:
• Lenkistwinkel
• Lenkleistung eines elektrischen Lenkaktuators
• Kippgrenze des Flurförderzeugs
• Aufgenommen Last
• Lastschwerpunkt einer aufgenommenen Last
• Assistenzsystem zur Umgebungsüberwachung und/oder Kollisionsvermeidung
• System für Zonenkontrolle (Zone Control)

12. Flurförderzeug nach einem der Ansprüche 1 bis 11, **dadurch gekennzeichnet, dass** das Flurförderzeug (1) einen Fahrersitz (4) mit einer Armlehne (5), insbesondere einer linken Armlehne, aufweist und der Joystick (7) der Lenkungsanlage an der Armlehne (5), insbesondere an der linken Armlehne, des Fahrersitzes (4) angeordnet ist.

13. Flurförderzeug nach einem der Ansprüche 1 bis 12, **dadurch gekennzeichnet, dass** das Flurförderzeug (1) als Gegengewichtsgabelstapler ausgebildet ist.

## Claims

1. Industrial truck (1) with a steer-by-wire steering system which comprises a joystick (7), as an actuating element, and a steering actuator (11), wherein an electronic control device (13) is provided which is operatively connected on the input side to the joystick (7) and on the output side to the steering actuator (11), wherein a variable steering transmission ratio is provided by means of which the steering angle range and the actual steering speed of the steering actuator (11) can be changed depending on the travel speed of the industrial truck (1),
**characterized in that** the electronic control device (13) controls the steering system in a closed control circuit, wherein a reference variable (w) of the closed control circuit can be generated by actuation of the joystick (7), wherein the electronic control device (13) is configured in such a manner that, when the joystick (7) is deflected (A), the speed of modification of the reference variable (w) in relation to the actuating speed of the joystick (7) is modified depending on the travel speed.

2. Industrial truck according to Claim 1, **characterized in that** the joystick (7) is actuable from a neutral position (D) in an actuating direction (+/- A).

3. Industrial truck according to Claim 1 or 2, **characterized in that** the electronic control device (13) is designed in such a manner that, when the joystick (7) is deflected (A), the value of the reference variable (w) is modified depending on the travel speed.

4. Industrial truck according to Claim 3, **characterized in that** the electronic control device (13) is configured in such a manner that, when the joystick (7) is deflected (A), the value of the reference variable (w) is reduced as the travel speed increases.

5. Industrial truck according to one of Claims 1 to 4, **characterized in that** the relationship between deflection (A) of the joystick (7) and reference variable (w) generated depending on the deflection (A) of the joystick (7) is predetermined in accordance with at least one characteristic curve (K1; K2), wherein at least two different characteristic curves (K1, K2) are provided for different travel speeds of the industrial truck (1) or a characteristic curve is changed depending on the travel speed.

6. Industrial truck according to one of Claims 1 to 5, **characterized in that** the electronic control device (13) is configured in such a manner that, when the joystick (7) is deflected, the speed of modification of the reference variable (w) in relation to the actuating speed of the joystick (7) is reduced as the travel speed increases.

7. Industrial truck according to one of Claims 1 to 6, **characterized in that** the electronic control device (13) is configured in such a manner that the speed of modification of an actuating variable (u) of the closed control circuit is changed depending on the travel speed.

8. Industrial truck according to Claim 7, **characterized in that** the electronic control device (13) is configured in such a manner that the speed of modification of the actuating variable (u) of the closed control circuit is reduced as the travel speed increases.

9. Industrial truck according to one of Claims 1 to 8, **characterized in that** the deflection range about the neutral position (D) of the joystick (7) is configured as a dead band (TB), wherein the electronic control device (13) is configured in such a manner that the dead band (TB) is modified depending on the travel speed of the industrial truck (1).

10. Industrial truck according to Claim 9, **characterized in that** the electronic control device (13) is configured in such a manner that the dead band (TB) is enlarged as the travel speed of the industrial truck (1) increases.

11. Industrial truck according to one of Claims 1 to 10, **characterized in that** the steering angle range and/or the steering speed of the steering actuator (11) can be modified depending on one or more of the following further parameters and/or a haptic feedback can be generated at the joystick depending on one or more of the following further parameters:
• actual steering angle
• steering power of an electric steering actuator
• tilting limit of the industrial truck
• picked-up load
• load centre of gravity of a picked-up load
• assistance system for monitoring the surroundings and/or avoiding collision
• system for zone control.

12. Industrial truck according to one of Claims 1 to 11, **characterized in that** the industrial truck (1) has a driver's seat (4) with an armrest (5), in particular a left armrest, and the joystick (7) of the steering system is arranged on the armrest (5), in particular on the left armrest, of the driver's seat (4).

13. Industrial truck according to one of Claims 1 to 12, **characterized in that** the industrial truck (1) is configured as a counterbalance forklift truck.

## Revendications

1. Chariot de manutention (1) comprenant un système de direction à commande par câble qui comprend une manette (7) comme élément d'actionnement et un actionneur de direction (11), dans lequel un dispositif de commande électronique (13) est prévu qui est en relation fonctionnelle avec la manette (7) côté entrée et avec l'actionneur de direction (11) côté sortie, dans lequel un rapport de direction variable est prévu au moyen duquel la plage d'angle de direction et la vitesse de direction réelle de l'actionneur de direction (11) sont modifiables en fonction de la vitesse de déplacement du chariot de manutention (1),
**caractérisé en ce que** le dispositif de commande électronique (13) pilote le système de direction en boucle fermée, dans lequel l'actionnement de la manette (7) permet de générer une grandeur de référence (w) de la boucle fermée, dans lequel le dispositif de commande électronique (13) est réalisé de telle sorte que lors d'une excursion (A) de la manette (7), la vitesse de modification de la grandeur de référence (w) par rapport à la vitesse d'actionnement de la manette (7) est modifiée en fonction de la vitesse de déplacement.

2. Chariot de manutention selon la revendication 1, **caractérisé en ce que** la manette (7) peut être actionnée à partir d'une position neutre (D) dans un sens d'actionnement (+/-A).

3. Chariot de manutention selon la revendication 1 ou 2, **caractérisé en ce que** le dispositif de commande électronique (13) est réalisé de telle sorte que lors d'une excursion (A) de la manette (7), la valeur de la grandeur de référence (w) est modifiée en fonction de la vitesse de déplacement.

4. Chariot de manutention selon la revendication 3, **caractérisé en ce que** le dispositif de commande électronique (13) est réalisé de telle sorte que lors d'une excursion (A) de la manette (7), la valeur de la grandeur de référence (w) est diminuée lorsque la vitesse de déplacement augmente.

5. Chariot de manutention selon l'une quelconque des revendications 1 à 4, **caractérisé en ce que** le lien entre l'excursion (A) de la manette (7) la grandeur de référence (w) générée en fonction de l'excursion (A) de la manette (7) est spécifié selon au moins une courbe caractéristique (K1 ; K2), dans lequel au moins deux courbes caractéristiques différentes (K1, K2) différentes sont prévues pour différentes vitesses de déplacement du chariot de manutention (1), ou une courbe caractéristique est modifiée en fonction de la vitesse de déplacement.

6. Chariot de manutention selon l'une quelconque des revendications 1 à 5, **caractérisé en ce que** le dispositif de commande électronique (13) est réalisé de telle sorte que lors d'une excursion de la manette (7), la vitesse de modification de la grandeur de référence (w) par rapport à la vitesse d'actionnement de la manette (7) est diminuée lorsque la vitesse de déplacement augmente.

7. Chariot de manutention selon l'une quelconque des revendications 1 à 6, **caractérisé en ce que** le dispositif de commande électronique (13) est réalisé de telle sorte que la vitesse de modification d'une grandeur de réglage (u) de la boucle fermée est modifiée en fonction de la vitesse de déplacement.

8. Chariot de manutention selon la revendication 7, **caractérisé en ce que** le dispositif de commande électronique (13) est réalisé de telle sorte que la vitesse de modification de la grandeur de réglage (u) de la boucle fermée est diminuée lorsque la vitesse de déplacement augmente.

9. Chariot de manutention selon l'une quelconque des revendications 1 à 8, **caractérisé en ce que** la zone d'excursion est réalisée autour de la position neutre (D) de la manette (7) comme une bande morte (TB), dans lequel le dispositif de commande électronique (13) est réalisé de telle sorte que la bande morte (TB) est modifiée en fonction de la vitesse de déplacement du chariot de manutention (1).

10. Chariot de manutention selon la revendication 9, **caractérisé en ce que** le dispositif de commande électronique (13) est réalisé de telle sorte que la bande morte (TB) est augmentée avec une vitesse de déplacement croissante du chariot de manutention (1).

11. Chariot de manutention selon l'une quelconque des revendications 1 à 10, **caractérisé en ce que** la plage d'angle de direction et/ou la vitesse de direction de l'actionneur de direction (11) est/sont modifiable(s) en fonction d'un ou de plusieurs des autres paramètres suivants et/ou un retour haptique peut être généré au niveau de la manette en fonction d'un ou de plusieurs des autres paramètres suivants :
• angle de direction réel
• puissance de direction d'un actionneur de direction électrique
• limite de basculement du chariot de manutention
• charge en place
• centre de gravité de charge d'une charge en place
• système d'assistance pour la surveillance de l'environnement et/ou système anticollision
• système de contrôle de zone (« zone control »).

12. Chariot de manutention selon l'une quelconque des revendications 1 à 11, **caractérisé en ce que** le chariot de manutention (1) présente un siège de conducteur (4) muni d'un accoudoir (5), en particulier d'un accoudoir gauche, et la manette (7) du système de direction est disposée sur l'accoudoir (5), en particulier sur l'accoudoir gauche, du siège de conducteur (4).

13. Chariot de manutention selon l'une quelconque des revendications 1 à 12, **caractérisé en ce que** le chariot de manutention (1) est réalisé comme un chariot-élévateur à contrepoids.
